# EUROPÄISCHE PATENTSCHRIFT

(11) **EP 2 373 845 B1**
(45) Veröffentlichungstag und Bekanntmachung des Hinweises auf die Patenterteilung: **02.09.2015**
(21) Anmeldenummer: 09752753.5
(22) Anmeldetag: 13.11.2009
(51) Int. Cl.: E01B 29/46

(54) **SCHWEISSAGGREGAT ZUM VERSCHWEISSEN VON SCHIENEN**
WELDING UNIT FOR WELDING RAILS
GROUPE DE SOUDAGE POUR LE SOUDAGE DE RAILS

(30) Priorität: 03.12.2008 AT 18812008
(43) Veröffentlichungstag der Anmeldung: 12.10.2011
(73) Patentinhaber: Plasser & Theurer Export von Bahnbaumaschinen Gesellschaft m.b.H., 1010 Wien (AT)
(72) Erfinder: THEURER, Josef, A-1010 Wien (AT); LICHTBERGER, Bernhard, A-4230 Pregarten (AT); MÜHLLEITNER, Heinz, A-3100 St. Pölten (AT)
(86) Internationale Anmeldenummer: PCT/EP2009/008078
(87) Internationale Veröffentlichungsnummer: WO 2010/063362

(56) Entgegenhaltungen:
- EP-A2- 0 499 019
- US-A1- 2003 141 283

## Beschreibung

Die Erfindung betrifft ein Schweißaggregat zum Verschweißen zweier Schienen eines Gleises, mit zwei entlang von Aggregatführungen durch Verschiebezylinder in Schienenlängsrichtung zueinander bewegbaren Aggregatteilen, die jeweils mit - zur Anlage an einen Schienensteg vorgesehene Kontaktflächen aufweisenden-Klemmbacken ausgestattet sind.

Derartige Schweißaggregate sind beispielsweise durch EP 0 132 227 A2 oder US 2003/0141283 A1 bekannt. Die Klemmbacken müssen mit hoher Kraft an den Schienensteg angepresst werden, um die Schienen in deren Längsrichtung für den die Schweißung abschließenden Stauchschlag exakt zueinander bewegen zu können.

Die Aufgabe der vorliegenden Erfindung liegt nun in der Schaffung eines Schweißaggregates der eingangs genannten Art, mit dem eine verbesserte Übertragung hoher Kräfte auf den Schienensteg möglich ist.

Diese Aufgabe wird erfindungsgemäß mit einem Schweißaggregat der gattungsgemäßen Art durch die im Kennzeichen des Hauptanspruches angeführten Merkmale gelöst.

Mit Hilfe der zylinderförmigen Gleitfläche erhalten die Klemmbacken eine geringfügige Bewegungsfreiheit, um sich trotz Unregelmäßigkeiten, wie sie beispielsweise durch Schienenkopftoleranzen entstehen, optimal an die Lage des Schienensteges anpassen zu können. Dies ermöglicht eine problemlose Übertragung auch besonders hoher Kräfte, wie sie insbesondere für eine Schluss-Schweißung im Rahmen einer von der Neutraltemperatur abweichenden Temperatur erforderlich sind.

Weitere Vorteile der Erfindung ergeben sich aus den Unteransprüchen und der Zeichnungsbeschreibung.

Im Folgenden wird die Erfindung anhand eines in der Zeichnung dargestellten Ausführungsbeispieles näher beschrieben. Es zeigen:

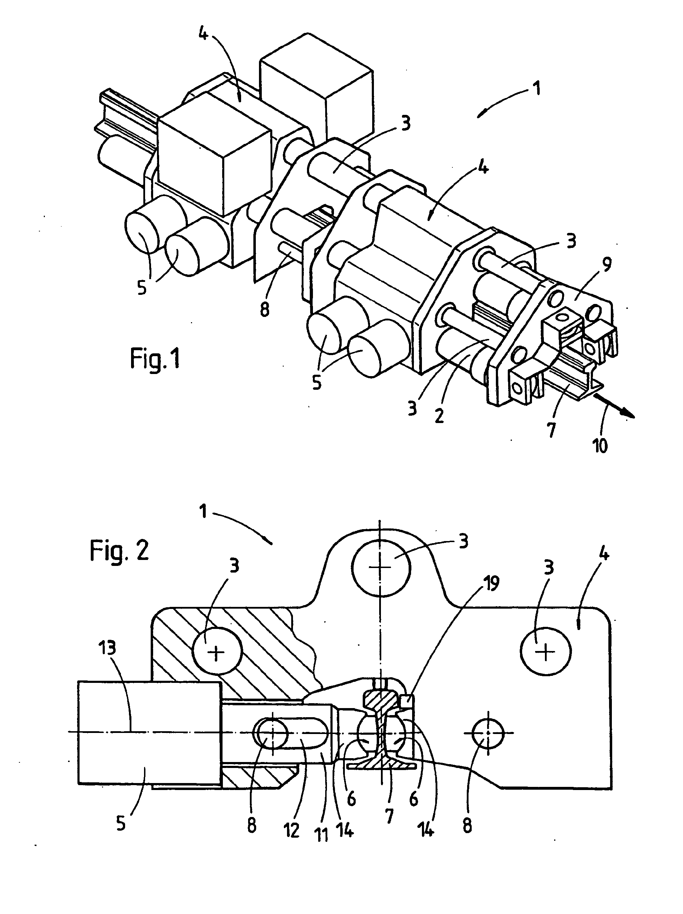

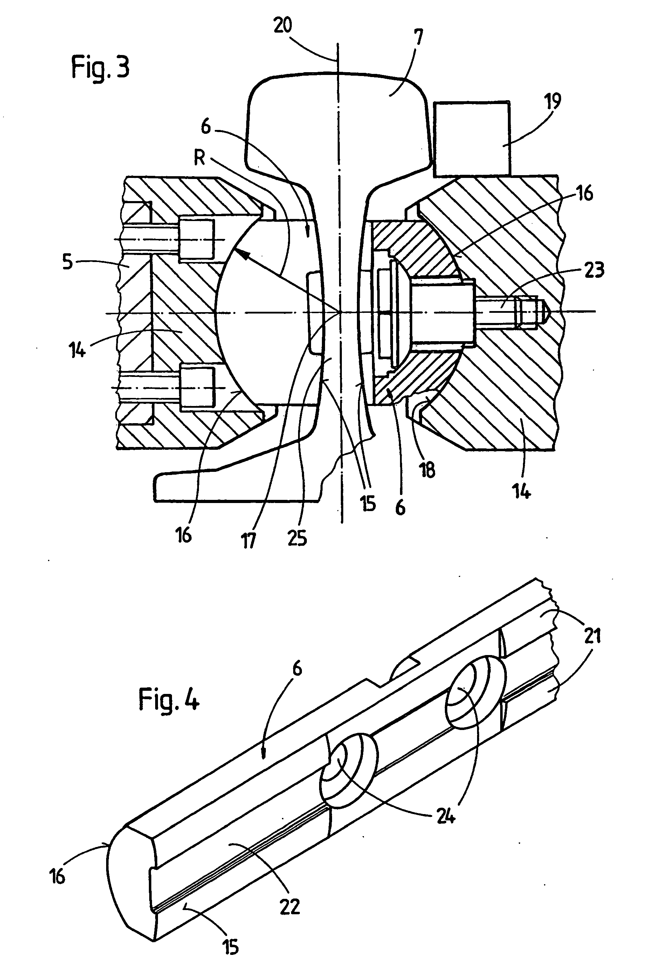

Fig. 1 eine Ansicht des Schweißaggregates mit zwei zueinander bewegbaren Aggregatteilen, Fig. 2 einen vereinfachten Querschnitt durch einen Aggregatteil, Fig. 3 einen Querschnitt durch an einen Schienensteg anliegende Klemmbacken, und Fig. 4 eine Ansicht einer Klemmbacke.

Ein in den Fig. 1 bis 3 dargestelltes Schweißaggregat 1 setzt sich aus zwei mit Hilfe von Verschiebezylindern 2 entlang von Aggregatführungen 3 zueinander verschiebbaren Aggregatteilen 4 zusammen. Diese sind jeweils mit zwei Klemmantrieben 5 verbunden, mit denen Klemmbacken 6 an miteinander zu verschweißende Schienen 7 anpressbar sind.

Parallel zu den Aggregatführungen 3 verlaufende Zugstangen 8 sind am ersten Aggregatteil 4 befestigt und durch den zweiten Aggregatteil 4 hindurchgeführt. Die beiden Zugstangen 8 sind mit einem Querträger 9 verbunden, an dem die beiden Verschiebezylinder 2 angelenkt sind. Die normal zu einer Schienenlängsrichtung 10 verlaufenden Klemmantriebe 5 sind im Bereich von Kolbenstangen 11 jeweils mit einer Ausnehmung 12 zur Durchführung der Zugstange 8 ausgestattet.

Wie insbesondere in Fig. 2 und 3 ersichtlich, ist jede der in einer Schienenquerrichtung 13 einander gegenüberliegenden Klemmbacken 6 in einer Backenhalterung 14 gelagert. Von diesen ist jeweils eine fix mit dem Aggregatteil 4 und die gegenüberliegende Backenhalterung 14 mit der Kolbenstange 11 verbunden.

Wie in Fig. 3 dargestellt, weist jede Klemmbacke 6 eine von einer Kontaktfläche 15 distanzierte Gleitfläche 16 auf, die bezüglich eines normal zu einer Neutralachse 17 der Schiene 7 verlaufenden Querschnittes mit einem Radius R kreisbogenförmig gekrümmt ist. Die zur Fixierung der Klemmbacken 6 vorgesehenen Backenhalterungen 14 weisen ebenfalls eine Gleitfläche 18 auf, die entsprechend der Gleitfläche 16 der Klemmbacke 6 mit dem Radius R gekrümmt ist. Es bilden also beide Gleitflächen 16, 18 einen Teil einer Zylinderfläche, so dass die Klemmbacke 6 jeweils relativ zur Backenhalterung 14 um die Neutralachse 17 bewegbar ist.

Die Verbindung jeder Klemmbacke 6 mit der zugeordneten Backenhalterung 14 erfolgt durch eine Schraube 23, die durch einen entsprechend geformten Kopf die genannte Verdrehbarkeit der Klemmbacke 6 in einem Bereich von etwa 1 bis 2 Grad ermöglicht.

Wie in Fig. 2 und 3 ersichtlich, ist die dem Klemmantrieb 5 gegenüberliegende Backenhalterung 14 mit einer parallel zur Schienenlängsrichtung 10 verlaufenden Anschlagleiste 19 verbunden. Damit können die zu verschweißenden Schienen 7 in einer gemeinsamen Fluchtlinie ausgerichtet werden. Von den beiden paarweise einander gegenüberliegenden Klemmbacken 6 ist lediglich eine durch den Klemmantrieb 5 in einer normal zu einer Schienensymmetrieebene 20 verlaufenden Richtung relativ zum Aggregatteil 4 bewegbar.

Wie insbesondere in Fig. 4 ersichtlich, weist die Klemmbacke 6 zwei parallel zueinander und in Schienenlängsrichtung verlaufende, die Kontaktfläche 15 bildende Kontaktleisten 21 auf, die durch eine Vertiefung 22 voneinander getrennt sind. Bohrungen 24 sind jeweils zur Aufnahme des bereits erwähnten Kopfes der Schrauben 23 vorgesehen. Die Kontaktfläche 15 auf jeder Klemmbacke 6 bzw. Kontaktleiste 21 ist zur Verbesserung der Kraftschlussverbindung mit einem Schienensteg 25 durch eine Plasma - Pulverschweißung vergütet.

Zur Einleitung des Schweißvorganges werden die Schienen 7 durch eine nicht näher dargestellte Hebeeinrichtung von den Schwellen des Gleises abgehoben und an die Anschlagleisten 19 angepresst. Anschließend werden die Klemmantriebe 5 beaufschlagt, um die mit diesen verbundenen Klemmbacken 6 mit einer Klemmkraft von etwa 350 t an den Schienensteg 25 der Schiene 7 sowie an die gegenüberliegenden Klemmbacken 6 anzupressen.

Sofern nun beispielsweise infolge von Querschnittsabweichungen im Toleranzbereich die beiden an die Anschlagleisten 19 anliegenden Schienen 7 nicht exakt in einer gemeinsamen Schienensymmetrieebene 20 liegen, kommt es zu einer entsprechenden selbsttätigen Verdrehung und Anpassung der Klemmbacken 6. Damit ist in weiterer Folge eine problemlose Übertragung der großen Klemmkräfte auf den Schienensteg 25 möglich, um schließlich über die Verschiebezylinder 2 die Schienen 7 für deren Verschweißung aneinander zu pressen.

## Patentansprüche

1. Schweißaggregat (1) zum Verschweißen zweier Schienen (7) eines Gleises, mit zwei entlang von Aggregatführungen (3) durch Verschiebezylinder (2) in Schienenlängsrichtung (10) zueinander bewegbaren Aggregatteilen (4), die jeweils mit - zur Anlage an einen Schienensteg (25) vorgesehene Kontaktflächen (15) aufweisenden - Klemmbacken (6) ausgestattet sind, **gekennzeichnet durch** folgende Merkmale:
a) jede Klemmbacke (6) weist eine von der Kontaktfläche (15) in Schienenquerrichtung (13) distanzierte Gleitfläche (16) auf, die bezüglich eines normal zu einer Neutralachse (17) der Schienen (7) verlaufenden Querschnittes kreisbogenförmig gekrümmt ist,
b) eine zur Fixierung der Klemmbacke (6) vorgesehene Backenhalterung (14) weist eine Gleitfläche (18) auf, die der Gleitfläche (16) der Klemmbacke (6) entsprechend gekrümmt ist, so dass die Klemmbacke (6) entlang der Gleitflächen (16, 18) relativ zur Backenhalterung (14) bewegbar ist.

2. Schweißaggregat nach Anspruch 1, **dadurch gekennzeichnet, dass** ein Kreisbogenmittelpunkt der beiden Gleitflächen (16, 18) in der Neutralachse (17) der Schienen (7) positioniert ist.

3. Schweißaggregat nach Anspruch 1, **dadurch gekennzeichnet, dass** eine der beiden Backenhalterungen (14) mit einer Anschlagleiste (19) zur Anlage an einen Schienenkopf der Schiene (7) verbunden ist.

4. Schweißaggregat nach einem der Ansprüche 1, 2 oder 3, **dadurch gekennzeichnet, dass** lediglich eine der beiden Klemmbacken (6) durch den Klemmantrieb (5) in einer normal zu einer Schienensymmetrieebene (20) verlaufenden Richtung relativ zum Aggregatteil (4) bewegbar ist.

5. Schweißaggregat nach einem der Ansprüche 1 bis 4, **dadurch gekennzeichnet, dass** jede Klemmbacke (6) zwei parallel zueinander und in Schienenlängsrichtung (10) verlaufende, die Kontaktfläche (15) bildende Kontaktleisten (21) aufweist, die durch eine Vertiefung (22) voneinander getrennt sind.

6. Schweißaggregat nach Anspruch 5, **dadurch gekennzeichnet, dass** die Kontaktfläche (15) auf jeder Kontaktleiste (21) durch Plasma - Pulverschweißung gebildet ist.

## Claims

1. A welding unit (1) for welding two rails (7) of a track, including two unit parts (4) which are movable towards one another in the longitudinal direction (10) of the rails along guides (3) of the unit by means of displacement cylinders (2) and are each equipped with clamping jaws (6) having contact surfaces (15) intended for application to a rail web (25), **characterized by** the following features:
a) each clamping jaw (6) has a sliding surface (16), spaced from the contact surface (15) in the transverse direction (13) of the rails, which is curved - with respect to a cross-section extending perpendicularly to a neutral axis (17) of the rails (7) - in the shape of a circular arc,
b) a jaw mount (14) provided for fixation of the clamping jaw (6) has a sliding surface (18) which is curved in accordance with the sliding surface (16) of the clamping jaw (6), so that the clamping jaw (6) is movable along the sliding surfaces (16, 18) relative to the jaw mount (14).

2. A welding unit according to claim 1, **characterized in that** a circular arc centre point of the two sliding surfaces (16, 18) is positioned in the neutral axis (17) of the rails (7).

3. A welding unit according to claim 1, **characterized in that** one of the two jaw mounts (14) is connected to a stop bar (19) intended for application to a rail head of the rail (7).

4. A welding unit according to one of claims 1, 2 or 3, **characterized in that** only one of the two clamping jaws (6) is movable relative to the unit part (4) by means of the clamping drive (5) in a direction extending perpendicularly to a plane of symmetry (20) of the rail.

5. A welding unit according to one of claims 1 to 4, **characterized in that** each clamping jaw (6) has two contact bars (21), extending parallel to one another and in the longitudinal direction (10) of the rail and forming the contact surface (15), which are separated from one another by a recess (22).

6. A welding unit according to claim 5, **characterized in that** the contact surface (15) on each contact bar (21) is formed by plasma transfer arc welding.

## Revendications

1. Module à souder (1) pour souder deux rails (7) d'une voie ferrée, avec deux parties de module (4) mobiles l'une par rapport à l'autre le long de guides de module (3) par des cylindres de coulissement (2) dans le sens longitudinal de rail (10) qui sont équipées chacune de mâchoires de serrage (6) présentant des faces de contact (15) prévues pour l'appui sur une âme de rail (25), **caractérisé par** les caractéristiques suivantes :
a) chaque mâchoire de serrage (6) présente une face de glissement (16) écartée de la face de contact (15) dans le sens transversal de rail (13) qui est courbée en forme d'arc de cercle par rapport à une section transversale s'étendant perpendiculairement à un axe neutre (17) des rails (7),
b) un dispositif de fixation de mâchoire (14) prévu pour la fixation de la mâchoire de serrage (6) présente une face de glissement (18) qui est courbée de manière correspondante à la face de glissement (16) de la mâchoire de serrage (6) de sorte que la mâchoire de serrage (6) est mobile le long des faces de glissement (16, 18) par rapport au dispositif de fixation de mâchoire (14).

2. Module à souder selon la revendication 1, **caractérisé en ce qu'**un centre d'arc de cercle des deux faces de glissement (16, 18) est positionné dans l'axe neutre (17) des rails (7).

3. Module à souder selon la revendication 1, **caractérisé en ce qu'**un des deux dispositifs de fixation de mâchoire (14) est relié à une baguette de butée (19) pour l'appui sur une tête de rail du rail (7).

4. Module à souder selon une des revendications 1, 2 ou 3, **caractérisé en ce que** seule une des deux mâchoires de serrage (6) est mobile par l'entraînement de serrage (5) dans un sens s'étendant perpendiculairement à un plan de symétrie de rail (20) par rapport à la partie de module (4).

5. Module à souder selon une des revendications 1 à 4, **caractérisé en ce que** chaque mâchoire de serrage (6) présente deux réglettes de contact (21) s'étendant parallèlement l'une à l'autre et dans le sens longitudinal de rail (10), formant la face de contact (15) qui sont séparées l'une de l'autre par un renfoncement (22).

6. Module à souder selon la revendication 5, **caractérisé en ce que** la face de contact (15) est formée sur chaque réglette de contact (21) par soudage à l'arc de plasma-à la poudre.
